# EUROPEAN PATENT SPECIFICATION

(11) **EP 1 095 049 B1**
(45) Date of publication and mention of the grant of the patent: **12.03.2003**
(21) Application number: 99934557.2
(22) Date of filing: 02.07.1999
(51) Int. Cl.: C07F 9/38

(54) **PREPARATION OF N-PHOSPHONOMETHYLGLYCINE SALTS**
HERSTELLUNG VON N-PHOSPHONOMETHYLGLYCIN SALZEN
PREPARATION DE SELS DE N-PHOSPHONOMETHYLGLYCINE

(30) Priority: 06.07.1998 CH 143698
(43) Date of publication of application: 02.05.2001
(73) Proprietor: Syngenta Participations AG, 4058 Basel (CH)
(72) Inventor: SIEBENHAAR, Bernd, D-79400 Kandern (DE); STUDER, Martin, CH-4054 Basel (CH)
(74) Representative: Bastian, Werner Maria
(86) International application number: EP9904587
(87) International publication number: WO00001707

(56) References cited:
- EP-A- 0 098 034
- EP-A- 0 472 693
- WO-A-99/43430
- US-A- 3 950 402
- US-A- 4 147 719

## Description

The invention relates to a catalytic preparation process for N-phosphonomethylglycine salts by means of oxidative dealkylation of N-phosphonomethyliminodiacetic acid with oxygen in an aqueous-basic solution and in the presence of a noble metal catalyst on a solid carrier, the process being characterised by the fact that (a) the noble metal is selected from the group platinum, palladium or mixtures of palladium and platinum, and platinum or palladium individually or together in a mixture with ruthenium, rhodium, osmium or iridium, and (b) it is additionally mixed with at least one metal from the group bismuth, lead, tin, tellurium, germanium, vanadium, chromium, iron, manganese, molybdenum and tungsten.

N-phosphonomethylglycine of formula I

HO₂C-CH₂ ― NH―CH₂-PO₃H₂ (I)

is a known herbicide or a known plant growth regulator, see US-A-4 147 719.

From US-A-4 147 719 a catalytic preparation process for N-phosphonomethylglycine salts is also known, in which a salt of N-phosphonomethyliminodiacetic acid of formula II 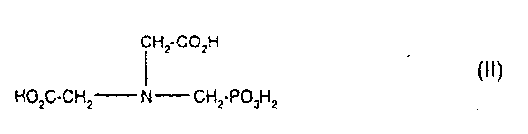 is reacted with oxygen in an aqueous-basic solution and in the presence of a platinum catalyst on activated carbon as a solid carrier. Disadvantages of this process are: (a) the use of a specific carrier that has to be activated, which increases the costs of the catalyst, (b) the restriction of the noble metal to platinum, and (c) the dissolving of substantial amounts of platinum in the product, which is linked with deactivation of the catalyst and thus limited reusability and platinum losses during reworking. In all, these disadvantages lead to an uneconomical process that cannot therefore be used in industry.

It has now surprisingly been found that (a) both platinum and palladium can be used either individually or mixed together and additionally in admixture with further noble metals, (b) non-activated solid carriers can be used, (c) no losses in catalyst activity or catalyst selectivity are observed, and (d) the losses in noble metals are substantially reduced, if at least one further metal is added from the group bismuth, lead, tin, tellurium, germanium, vanadium, chromium, iron, manganese, molybdenum and tungsten. As a rule, higher yields are achieved, and the catalysts may be reused several times.

The subject matter of the present invention is thus a process for the preparation of N-phosphonomethylglycine salts by reacting a salt of N-phosphonomethyliminodiacetic acid, whereby the salt-forming cation is selected from the group alkali metals, alkaline earth metals, ammonium and organic ammonium, in the presence of oxygen in an aqueous-basic or aqueous solution and in the presence of a noble metal catalyst on a solid carrier, under excess pressure and at elevated temperature, the process being characterised by the fact that (a) the noble metal is selected from the group platinum, palladium or mixtures of palladium and platinum, and platinum or palladium individually or together in a mixture with ruthenium, rhodium, osmium or iridium, and (b) it is additionally admixed with at least one doping metal from the group bismuth, lead, tin, tellurium, germanium, vanadium, chromium, iron, manganese, molybdenum and tungsten.

Preferred alkali metals are Li, Na, K, Rb and Cs, most preferably Na and K. Preferred alkaline earth metals are Mg, Ca, Ba and Sr. Organic ammonium is understood to be, in the context of the invention, salt-forming cations of primary, secondary, tertiary and quaternary ammonium. The N-atom may be substituted by aromatic radicals having 6 to 14 carbon atoms, aromatic-aliphatic radicals having 7 to 15 carbon atoms, or preferably linear or branched aliphatic radicals having 1 to 12 carbon atoms, or preferably cyclic aliphatic radicals having 3 to 12 ring carbon atoms. Especially preferred is organic ammonium with 1 to 4 identical or different substituents from the group linear or branched alkyl with 1 to 8, more preferably 1 to 6, and most preferably 1 to 4, carbon atoms, and cycloalkyl with having 5 or 6 ring carbon atoms. Primary C₁-C₆-alkylammonium is preferred in particular. Salt-forming cations are most preferably derived from metals selected from the group Na, K, Mg, Ca and Ba, as well as ammonium (NH₄⁺) and C₁-C₆-alkylammonium.

In order to form the salt, the corresponding alkali metal hydroxides, alkaline earth metal hydroxides, ammonium hydroxides or organic ammonium hydroxide are added to the aqueous solution of N-phosphonomethyliminodiacetic acid. The molar ratio of N-phosphonomethyliminodiacetic acid to hydroxide (or to salt-forming cation) may be from 1:1 to 1:2, preferably 1:1.5 and most preferably 1:1.3. The reaction mixture may accordingly be basic, neutral or acidic, depending on the molar ratio.

Oxygen may be used in pure form, or mixed with inert gases, for example nitrogen or noble gases. The oxygen is generally under pressure, so that the reaction is carried out under excess pressure, for example 1000 hPa to 10,000 hPa, preferably 1000 to 5000 hPa.

The reaction temperature may be for example 30 to 200° C, preferably 60 to 150° C, most preferably 80 to 130° C.

The solid carriers may be for example finely divided activated carbon, finely divided SiO₂ gel, SiO₂ mixed gel with Al, Ti and/or Zr oxides, finely divided silicate minerals (diatomaceous earth, alumina, zeolites, bentonites, montmorillonites) and finely divided aluminium oxide. The preferred carrier is activated carbon.

The catalyst metal is preferably present in a quantity of 1 to 10, more preferably 2 to 5 % by weight, based on the carrier. The metals used for doping may be present in an amount of 0.5 to 10, more preferably 1 to 5 % by weight. The weight ratio of noble metal or noble metals to doping metal is preferably 1:20 to 1:1, most preferably 1:10 to 1:1.

Preferred noble metals are Pd and especially Pt. Preferred doping metals are Bi, Pb and Sn, most preferably Bi and Pb. These preferred noble metals and doping metals are used in particular on activated carbon as the carrier. The catalysts that have proved to be particularly effective are those which contain platinum on activated carbon and the doping metals bismuth or lead, whereby platinum is present in an amount of 3 to 6 % by weight and the doping metal in an amount of 1 to 6 % by weight.

The catalyst consisting of carrier / noble metal / doping metal is preferably employed in amounts of 4 to 20, more preferably 4 to 15, most preferably 5 to 10 % by weight, based on the amount of N-phosphonomethyliminodiacetic acid.

The process may be carried out for example, whereby N-phosphonomethyliminodiacetic acid, the catalyst and the base are added to water in a pressurised container, and the mixture is heated to the reaction temperature. Then, the air is expelled by applying oxygen pressure, and the reaction mixture is stirred or shaken. The pressure is increased by about 500 to 1000 hPa through the formation of CO₂. Afterwards, the gas phase is drawn off, and oxygen pressure is again applied. When no further pressure increase is observed, the reaction is complete. The desired N-phosphonomethylglycine salt is isolated for example by evaporating off the water and the formaldehyde that has formed. The acid may be produced from the salt in conventional manner, by treatment with an acid.

In the process according to the invention, the yield is considerably higher than 90% and the N-phosphonomethylglycine (PMG) content in the isolated product is at least 70%. The noble metal content in the isolated product is less than 10 ppm, whereas in processes without the addition of a doping metal, the content is considerably higher than 200 ppm. In the isolated product, at first amounts of more than 500 ppm of doping metal are established. When the catalyst is reused, this amount is reduced substantially, depending on the number of reuses, to below 10 ppm. The catalyst may be reused up to ten times or more, with only a slight loss in activity being observed.

The catalysts are known, partly commercial, or may be produced by analogous processes, for example separating from corresponding metal salt solutions by reduction on the carrier.

The following examples illustrate the invention more fully.

### Example 1:

### a) Usage of a Pt/Bi catalyst on activated carbon

100 ml of water, 12 g (0.049 mols) of N-phosphonomethyliminodiacetic acid (NPDS) and 3.15 g (0.053 mols) of isopropylamine are placed in a pressurised container. Afterwards, 1.0 g of catalyst is added (3% each of Pt and Bi on activated carbon; Degussa CF 196 XR/W B93/11) and heated to 90-105°C. Then, oxygen pressure is applied to a pressure of 2000 hPa, the pressure is released and then reapplied with oxygen at 2000 hPa. The container is shaken during the reaction. After increasing the pressure to 2500 hPa, the gas phase is drawn off, 2 bars oxygen pressure are again applied, and shaking continues. The reaction is complete after 2 hours. After cooling, the catalyst is filtered off and the reaction mixture is evaporated to dryness. The yield is 10.7 g (96%) NPDS-isopropylamine salt; the content of N-phosphonomethylglycine (PMG) according to HPLC analysis is 84% and the content of Pt is only 4 ppm.

### a) Usage of a Pt catalyst on activated carbon

Example a) is repeated and 1.0 g of catalyst (5% Pt on activated carbon) is used. The yield is 9.0 g (72%) NPDS-isopropylamine salt; the content of PMG according to HPLC analysis is 79% and the content of Pt is 210 ppm.

### Example 2: Usage of a Pt/Pb catalyst.

Example 1a) is repeated and 1.0 g of catalyst (5% Pt and 1% Pb on activated carbon; Degussa CF 101 R/W) is used. The yield is 10.0 g (96%) NPDS-isopropylamine salt; the content of PMG according to HPLC analysis is 85% and the content of Pt is 5 ppm.

### Examples 3-6 Reuse of the catalyst

Example 1a) is repeated and the catalyst used is 3% each of Pt and Bi on activated carbon; Degussa CF 196 XR/W B93/11 (examples 3 and 4). The separated catalyst is washed three times with deionised water and used again without further treatment (examples 5 and 6). Further details may be found in Table 1.

| Example No. | catalyst (g) | yield (g) (% of theory) | PMG content % according to HPLC | ppm Pt in PMG | ppm Bi in PMG |
|---|---|---|---|---|---|
| 3 | 1 | 11.0 (98) | 78 | 4 | 840 |
| 4 | 0.08 | 10.6 (95) | 85 | 6 | 740 |
| 5 | A | 10.4 (93) | 85 | 6 | 230 |
| 6 | B | 10.8 (96) | 80 | 5 | 33 |

## Claims

1. Process for the preparation of N-phosphonomethylglycine salts by reacting a salt of N-phosphonomethyliminodiacetic acid, whereby the salt-forming cation is selected from the group alkali metals, alkaline earth metals, ammonium and organic ammonium, in the presence of oxygen in an aqueous-basic or aqueous solution and in the presence of a noble metal catalyst on a solid carrier, under excess pressure and at elevated temperature, the process being **characterised by** the fact that (a) the noble metal is selected from the group platinum, palladium or mixtures of palladium and platinum, and platinum or palladium individually or together in a mixture with ruthenium, rhodium, osmium or iridium, and (b) it is additionally admixed with at least one doping metal from the group bismuth, lead, tin, tellurium, germanium, vanadium, chromium, iron, manganese, molybdenum and tungsten.

2. Process according to claim 1, wherein the salt-forming cations are derived from metals selected from the group Na, K, Mg, Ca and Ba, as well as ammonium (NN₄⁺) and C₁-C₆-alkylammonium

3. Process according to claim 2, wherein the alkylammonium is isopropylamine.

4. Process according to claim 1, wherein the molar ratio of N-phosphonomethyliminodiacetic acid to salt-forming cation is 1:1 to 1:2.

5. Process according to claim 1, wherein the excess pressure is 1 to 10 bar.

6. Process according to claim 1, wherein the reaction temperature is 30 to 200°C.

7. Process according to claim 1, wherein the catalyst metal is present in a quantity of 1 to 10% by weight, based on the carrier, and the metals used for doping are present in an amount of 0.5 to 10% by weight.

8. Process according to claim 1, wherein the weight ratio of noble metal or noble metals to doping metal is 1:20 to 1:1.

9. Process according to claims 1 to 8, wherein the noble metai is Pt and the doping metals are Bi and Pb, and the carrier is activated carbon.

10. Process according to claim 9, wherein the catalyst is platinum on activated carbon and contains the doping metals bismuth or lead, whereby platinum is present in an amount of 3 to 6 % by weight and the doping metal in an amount of 1 to 6 % by weight, based on the carrier.

## Patentansprüche

1. Verfahren zur Herstellung von N-Phosphonomethylglycinsalzen durch Umsetzen eines Salzes von N-Phosphonomethyliminodiessigsäure, wobei das salzbildende Kation aus der Gruppe Alkalimetalle, Erdalkalimetalle, Ammonium und organisches Ammonium ausgewählt ist, in Gegenwart von Sauerstoff in einer wäßrig-basischen oder wäßrigen Lösung und in Gegenwart eines Edelmetallkatalysators auf einem festen Träger unter Überdruck und bei erhöhter Temperatur, wobei das Verfahren **dadurch gekennzeichnet ist, daß** (a) das Edelmetall aus der Gruppe Platin, Palladium oder Mischungen aus Palladium und Platin und Platin oder Palladium individuell oder zusammen in einer Mischung mit Ruthenium, Rhodium, Osmium oder Iridium ausgewählt ist und (b) es zusätzlich mit wenigstens einem Dotierungsmetall aus der Gruppe Bismut, Blei, Zinn, Tellur, Germanium, Vanadium, Chrom, Eisen, Mangan, Molybdän und Wolfram vermischt ist.

2. Verfahren gemäß Anspruch 1, worin die salzbildenden Kationen aus Metallen, die aus der Gruppe Na, K, Mg, Ca und Ba ausgewählt sind, sowie Ammonium (NH₄⁺) und C₁₋₆-Alkylammonium stammen.

3. Verfahren gemäß Anspruch 2, worin das Alkylammonium Isopropylamin ist.

4. Verfahren gemäß Anspruch 1, worin das Molverhältnis von N-Phosphonomethyliminodiessigsäure zu salzbildendem Kation 1:1 bis 1:2 beträgt.

5. Verfahren gemäß Anspruch 1, worin der Überdruck 1 bis 10 bar beträgt.

6. Verfahren gemäß Anspruch 1, worin die Reaktionstemperatur 30 bis 200°C beträgt.

7. Verfahren gemäß Anspruch 1, worin das Katalysatormetall in einer Menge von 1 bis 10 Gew.-% auf Basis des Trägers vorhanden ist und die zur Dotierung verwendeten Metalle in einer Menge von 0,5 bis 10 Gew.-% vorhanden sind.

8. Verfahren gemäß Anspruch 1, worin das Gewichtsverhältnis von Edelmetall oder Edelmetallen zu Dotierungsmetall 1:20 bis 1:1 beträgt.

9. Verfahren gemäß Ansprüchen 1 bis 8, worin das Edelmetall Pt ist und die Dotierungsmetalle Bi und Pb sind und der Träger Aktivkohle ist.

10. Verfahren gemäß Anspruch 9, worin der Katalysator Platin auf Aktivkohle ist und die Dotierungsmetalle Bismut oder Blei enthält, wobei Platin in einer Menge von 3 bis 6 Gew.-% und das Dotierungsmetall in einer Menge von 1 bis 6 Gew.-%, bezogen auf den Träger, vorhanden ist.

## Revendications

1. Procédé de préparation de sels de N-phosphonométhylglycine par réaction d'un sel de l'acide N-phosphonométhyliminodiacétique, où le cation formateur de sel est choisi dans le groupe des métaux alcalins, des métaux alcalino-terreux, de l'ammonium et de l'ammonium organique, en présence d'oxygène dans une solution basique aqueuse ou une solution aqueuse et en présence d'un catalyseur à métal noble sur un support solide, sous pression et à une température élevée, le procédé étant **caractérisé par le fait que** (a) le métal noble est choisi dans le groupe du platine, du palladium ou de mélanges de palladium et de platine, et le platine ou le palladium individuellement ou ensemble dans un mélange avec le ruthénium, le rhodium, l'osmium ou l'iridium, et (b) il est mélangé en outre avec au moins un métal dopant du groupe du bismuth, du plomb, de l'étain, du tellure, du germanium, du vanadium, du chrome, du fer, du manganèse, du molybdène et du tungstène.

2. Procédé selon la revendication 1, où les cations formateurs de sel sont dérivés de métaux choisis dans le groupe de Na, K, Mg, Ca et Ba, ainsi que l'ammonium (NH₄⁺) et un alkylammonium en C₁-C₆.

3. Procédé selon la revendication 2, où l'alkylammonium est l'isopropylamine.

4. Procédé selon la revendication 1, où le rapport molaire de l'acide N-phosphonométhyliminodiacétique au cation formateur de sel est 1:1 à 1:2.

5. Procédé selon la revendication 1, où la pression est de 1 à 10 bar.

6. Procédé selon la revendication 1, où la température de réaction est 30 à 200°C.

7. Procédé selon la revendication 1, où le métal du catalyseur est présent en une quantité de 1 à 10 % en masse, par rapport au support, et les métaux utilisés pour dopage sont présents en une quantité de 0,5 à 10 % en masse.

8. Procédé selon la revendication 1, où le rapport massique du métal noble ou des métaux nobles au métal dopant est 1:20 à 1:1.

9. Procédé selon les revendications 1 à 8, où le métal noble est Pt et les métaux dopants sont Bi et Pb, et le support est du carbone activé.

10. Procédé selon la revendication 9, où le catalyseur est le platine sur du carbone activé et contient les métaux dopants bismuth ou plomb, le platine étant présent en une quantité de 3 à 6 % en masse et le métal dopant en une quantité de 1 à 6 % en masse, par rapport au support.
